# EUROPEAN PATENT SPECIFICATION

(11) **EP 0 489 941 B1**
(45) Date of publication and mention of the grant of the patent: **03.05.1995**
(21) Application number: 90123580.4
(22) Date of filing: 07.12.1990
(51) Int. Cl.: C08F 226/06, C09D 157/12

(54) **Industrial coatings with oxazoline latex**
Industrielle Beschichtungsmittel mit Oxazolinlatex
Revêtement industriel contenant un latex d'oxazoline

(43) Date of publication of application: 17.06.1992
(73) Proprietor: THE DOW CHEMICAL COMPANY, Midland, Michigan 48640 (US)
(72) Inventor: Rice, Daniel B., Shepherd, Michigan 48883 (US); Keskey, William H., Midland, MI 48640 (US); Galloway, James G., Midland, MI 48640 (US)
(74) Representative: Casalonga, Axel

(56) References cited:
- EP-A- 0 176 609
- PATENT ABSTRACTS OF JAPAN, vol. 14, no. 322 (C-739)[4265], 10th July 1990;& JP-A-2 115 283
- CHEMICAL ABSTRACTS, vol. 84, no. 20, 17th May 1976, page 102, abstract no.137329t, Columbus, Ohio, US; &JP-A-76 10 837

## Description

The present invention incorporates the use of oxazoline monomers in combination with other monomers typically used in emulsion polymerizations to prepare a copolymer latex that is salt fog and flash rust resistant when used in an industrial coating or paint formulation.

Latex polymers are well known in the art to provide binding in paint formulations. However, such aqueous coatings can cause rusting when the formulations are coated on cold rolled steel.

EP-A-0 176 609, PATENT ABSTRACT OF JAPAN, vol. 14, no. 322(C-739)[4265], 1990, and CHEMICAL ABSTRACTS, vol. 84, no. 20, 1976, page 102, abstract no. 137329t disclose coating compositions comprising a polymer latex containing oxazoline monomer.

Accordingly, the present invention is a method of increasing the resistance of a latex based coating to rusting and salt fog by the addition of oxazoline monomers during the polymerization of the copolymer latex. Specifically, the latex utilized in the present invention is an emulsion polymerized copolymer having
(a) a first charge of monomer comprising an effective amount of at least one ethylenically unsaturated monomer and
(b) a second charge of monomer comprising (i) an effective amount of an oxazoline monomer represented by the following formula: 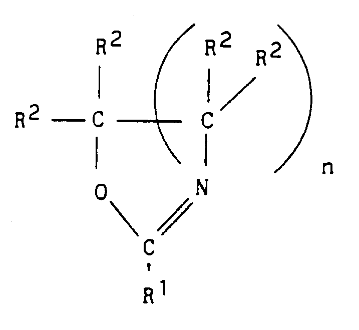 wherein R¹ is a polymerizable organic group; each R² is independently hydrogen, halogen, alkyl, or an alkylene group of two to four carbons; n is 1 or 2; and (ii) an effective amount of at least one ethylenically unsaturated comonomer. This copolymer latex is admixed with other standard components to form an industrial coating formulation.

The present invention is thus an industrial coating formulation which comprises a pigment carrier, a thickener, a defoamer, a wetting agent, a dispersant, a bacteriostat, at least one pigment, a pigment stabilizer and a latex copolymer of (i) an oxazoline monomer represented by the formula: 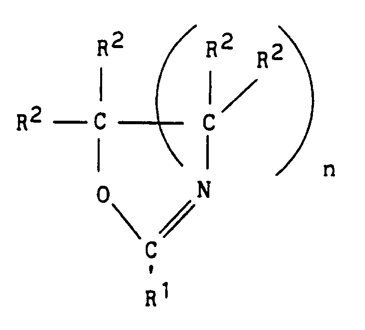
wherein R¹ is a polymerizable organic group; each R² is independently hydrogen, halogen, alkyl, or an alkylene group of two to four carbons; n is 1 or 2; and (ii) an effective amount of at least one ethylenically unsaturated comonomer. Preferably, R¹ is 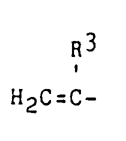
wherein R³ is hydrogen or an alkyl group. Most preferably, R¹ is an isopropenyl group. Each R² is preferably hydrogen or an alkyl group with hydrogen being most preferred; n is preferably 1. Most preferably the oxazoline monomer is 2-isopropenyl-Δ2-oxazoline.

The ethylenically unsaturated comonomers and mixtures of comonomers which are suitably employed with oxazoline monomer in the present copolymer latex include monovinyl aromatic monomers, aliphatic conjugated diene monomers, acrylate monomers, vinylidene halide or vinyl halide monomers, vinyl esters of carboxyl acids containing from 1 to 18 carbon atoms, such as vinyl acetate or vinyl stearate, methacrylonitrile and acrylonitrile. A monoethylenically unsaturated carboxylic acid monomer is also preferably included as a monomer in the first charge. The preferred comonomers of the first and second charge are the acrylate monomers.

The term "monovinyl aromatic monomer", as used herein, is meant to include those monomers with a polymerizable group of the formula 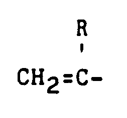
(wherein R is hydrogen or a lower alkyl such as an alkyl having from 1 to 4 carbon atoms) attached directly to an aromatic nucleus, including those wherein the aromatic nucleus is substituted with alkyl or halogen substituents. Examples include styrene, alpha methyl styrene, p-methyl styrene, t-butyl styrene, vinyltoluene, and halogenated styrene. The more preferred monomer of the monovinyl aromatic monomers is styrene.

Typically an effective amount of monovinyl aromatic monomer present in the copolymer will depend on the monomer chosen, however, the typical range will be from 10 to 90 weight percent based on the total weight of monomer.

The term "aliphatic conjugated diene", as used herein, is meant to include monomer compounds such as isoprene, 1,3-butadiene, 2-methyl-1,3-butadiene, piperylene (1,3-pentadiene), and other hydrocarbon analogs of 1,3-butadiene. Typically the amount of aliphatic conjugated diene monomer present in the copolymer will depend on monomer chosen, however, the typical range will be from 0 to 70 weight percent based on the total weight of monomer.

"Vinylidene halide" and "vinyl halide monomers" suitable for this invention include vinylidene chloride and vinyl chloride, which are highly preferred. Vinylidene bromide and vinyl bromide can also be employed.

Typically an effective amount of vinylidene halides and vinyl halides present in the copolymer will depend on monomer chosen, however, the typical range will be from 10 to 90 weight percent based on the total weight of monomer present.

The term "acrylate", as used herein, is meant to include acrylate or methacrylate monomers. The acrylates can include acids, esters, amides, and substituted derivatives thereof. Generally, the preferred acrylates are C₁-C₈ alkyl acrylates or methacrylates. Examples of such acrylates include butyl acrylate, hexyl acrylate, 2-ethyl hexyl acrylate, tert-butyl acrylate, methylmethacrylate, butylmethacrylate, ethyl methacrylate, hexylmethacrylate, isobutylmethacrylate, and isopropylmethacrylate and mixtures thereof. The preferred acrylates are butyl acrylate and methylmethacrylate.

Typically an effective amount of acrylate present in the copolymer will depend on monomer chosen, however, the typical range will be from 10 to 98 weight percent based on the total weight of the monomer.

The term "monoethylenically unsaturated carboxylic acid monomer", as used herein, is meant to include those monocarboxylic monomers such as acrylic acid, and methacrylic acid; dicarboxylic monomers such as itaconic acid, fumaric acid, maleic acid, and their monoesters.

Typically an effective amount of monoethylenically unsaturated carboxylic acid monomer present in the copolymer is that amount necessary to stabilize the copolymer particle. A typical example of such an amount is from 0.5 to 6 weight percent based on the total weight of monomer present.

The "oxazoline" monomer employed herein is as represented by the general structure: 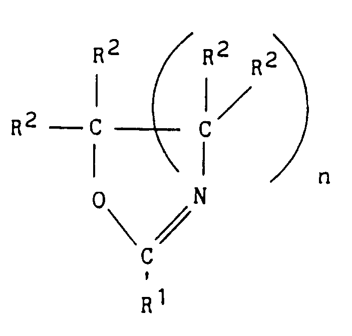
wherein R¹ is a polymerizable organic group; each R² is independently hydrogen, halogen, alkyl, or alkylene group of two to four carbons; n is 1 or 2. Preferably, R¹ is 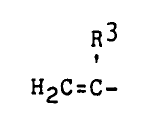
wherein R³ is hydrogen or an alkyl group. Most preferably, R¹ is an isopropenyl group. Each R² is preferably hydrogen or an alkyl group with hydrogen being most preferred; n is preferably 1. Most preferably the oxazoline monomer is 2-isopropenyl-Δ2-oxazoline.

The effective amounts of oxazoline monomer present are from 0.25 to 5.0 weight percent based on total amounts of monomer present in the copolymer. Preferably, the amounts of oxazoline monomer present are from 0.5 to 2.0 weight percent based on total amounts of monomer present in the copolymer. Most preferably the amounts of oxazoline monomer present are about 1.0 weight percent based on total amounts of monomer present in the copolymer.

A conventional crosslinking agent is also added during the polymerization of the monomers. Examples of conventional crosslinking agents include allyl acrylate, crotyl methacrylate or acrylate, ethylene glycol dimethacrylate and the like.

The monomers of the present invention can be polymerized by conventional emulsion polymerization processes. The more preferred method of polymerization is by a semi-continuous process. The polymerization is a two step process wherein a first charge of ethylenically unsaturated monomer, preferably a combination of acrylate monomers, and a monoethylenically unsaturated carboxylic acid is continuously added and allowed to polymerize; at the conclusion of the addition of the first monomer charge is added a second monomer charge typically comprised of the oxazoline monomer and at least one ethylenically unsaturated monomer preferably a combination of acrylate monomers. Prior to the addition of the second monomer charge of oxazoline monomer, the pH of the polymerization medium should be adjusted to greater than about 8.

The industrial coatings are typically formulated from a conventional pigment grind which is a mixture of: a pigment carrier such as water, a thickener, a defoamer, a wetting agent, a dispersant, a bacteriostat, pigments, a pigment stabilizer, a coalescent and a latex or a blend of latexes. For some applications it may be desirable to use a blend of one or more oxazoline containing latexes and one or more latexes which do not contain oxazoline. These components are conventionally known components of industrial paint formulations.

The flash rust resistance of either the latex or the paint formulation is determined by drawing the mixture down on clean cold-rolled steel such as matte finish Q-panels. The mixture is dried at cool temperatures and elevated humidity such as in a Forma Scientific Environmental Chamber to allow the latex film or the paint film to dry slowly and thereby optimizing the conditions in which rusting will occur.

### Example 1

Butyl acrylate/methylmethacrylate/methacrylic acid monomers in a ratio of 48/48/4.5 parts by weight are continuously added with stirring over a period of 2.0 hours at 66 parts by weight (per 100 parts by weight of the total monomer charge) into an initial aqueous medium containing .01 part by weight of the pentasodium salt of diethylenetriaminepentacetic acid and 0.52 parts by weight of a styrene/acrylic acid (96/4) copolymer seed latex. In addition, an aqueous stream containing (based on 100 parts by weight of the total monomer charge) 40 parts of deionized water, 1.0 part of sodium dodecyldiphenyl ether disulfonate and 0.2 part of sodium persulfate is added over a period of 3.5 hours commencing at the same time the acrylate monomer charge is started. After the butyl acrylate/methylmethacrylate/methacrylic acid charge has been added, the pH is adjusted from 3.0 to 8.0 using ammonium hydroxide. Following the pH adjustment, a butyl acrylate/methylmethacrylate/isopropenyl oxazoline (47.5/47.5/3.0) monomer charge is continuously added with stirring over a 1.0 hour period at 34 parts by weight per 100 parts total monomer charge.

A paint formulation is then prepared as follows. A paint grind is prepared by mixing, at 3000 rpm in a Cowles disperser for 15 to 20 minutes: 510 grams of diethylene glycol monomethyl ether, 120 grams of a polycarboxylic acid salt which acts as a dispersant, 30 grams of octylphenoxypolyethoxyethyl benzyl ether which acts as a surfactant, 37.5 grams of a defoamer made from petroleum derivatives, and 2550 grams of a titanium dioxide pigment. Comparative Sample A and Sample A are prepared by mixing for each sample: 60 grams of the paint grind with 5.5 grams of diethylene glycol monobutyl ether; 2.2 grams of a rheology modifier of methane polymers: propylene glycol and water; 9.6 grams of a coalescent of 2,2,4-trimethyl-1,3-pentandiol monoisobutyrate; latex; and water. The latexes used are Comparative Latex A, prepared similarly to the latex prepared above, comprising 47 percent styrene, 50 percent butylacrylate and 3 percent acrylic acid, and Latex A which is prepared similarly to the latex prepared above comprising 47 percent styrene, 49 percent butylacrylate, 3 percent acrylic acid and 1 percent isopropenyl oxazoline. The amount of latex added to the formulation is calculated such that 63.3 grams of latex solids are added to each sample. The total water added to the formulation is 122.9 grams. Ammonium hydroxide is then added to adjust the pH to about 10.

Drawdowns of each sample are then prepared on cold-rolled steel Q panels. Panels to be tested for salt fog in the salt fog chamber are drawn down using a 20 mil draw down bar at room temperature and allowed to air dry for a minimum of one week. The paint film thickness for each sample is 1.2 to 1.3 mil dry.

After 190 hours of exposure to salt fog as detailed in ASTM B-117, the results are evaluated as described in ASTM D-610. Sample A exhibits a rust reading of 9-2 (the 9 indicates the relative amount of surface area with rust and the 2 indicates the blisters formed) compared to a 7-2 (the 7 indicates the relative amount of surface area with rust and the 2 indicates the blisters formed) rating for Comparative Sample A.

### Example 2

A sample of butyl acrylate/methylmethacrylate/acrylic acid/isopropenyl oxazoline (48/48/2.0/2.0 by weight) is prepared similarly to the polymer latex prepared in Example 1. The sample is tested for flash rust resistance by drawing the latex alone down onto a R-36 Q panel using a 20 mil draw down bar and is immediately placed into a Forma Scientific Chamber set at 19°C and 93 percent relative humidity. The film is permitted to dry for approximately 24 hours. The final film thickness is 5 mils. The film is visually inspected by the naked eye for flash rust; the sample showed no rust on the majority of the surface. Whereas, for the comparative film prepared using a similar polymer but without the isopropenyl oxazoline, and exposed to the same conditions, rust appeared on the majority of the surface. Such data indicate a significant improvement in rust resistance when isopropenyl oxazoline is incorporated into the latex polymer.

## Claims

1. Use of an oxazoline monomer represented by the following formula: 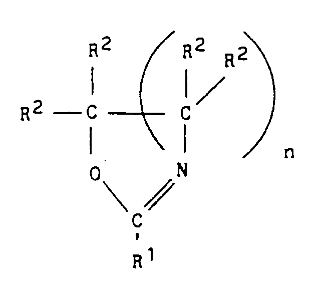 wherein R¹ is a polymerizable organic group; each R² is independently hydrogen, halogen, alkyl, or alkylene group of two to four carbons; n is 1 or 2; in combination with other monomers typically used in emulsion polymerisations to prepare a copolymer latex for improving the resistance of said latex coatings to salt fog and rust when used in industrial coating formulations.

2. Use of an oxazoline monomer as defined in Claim 1 in an industrial coating formulation having improved resistance to salt fog and rust, said coating formulation comprising:
a pigment carrier, a thickener, a defoamer, a wetting agent, a dispersant, a bacteriostat, at least one pigment, a pigment stabilizer and a latex copolymer wherein the latex copolymer is prepared from
(i) an oxazoline monomer as defined in Claim 1; and
(ii) at least one ethylenically unsaturated comonomer,
wherein the oxazoline monomer is present in an amount of from 0.25 to 5.0 weight percent based on total amounts of monomer present in the copolymer.

3. The industrial coating formulation of Claim 2 wherein the latex copolymer is prepared from
(a) a first charge of monomer comprising an effective amount of at least one ethylenically unsaturated monomer and
(b) a second charge of monomer comprising (i) the oxazoline monomer as defined in Claim 1; and (ii) an effective amount of at least one ethylenically unsaturated comonomer,
wherein the oxazoline monomer is present in an amount of from 0.25 to 5.0 weight percent based on total amounts of monomer present in the copolymer.

4. The industrial coating formulation of Claim 2 or Claim 3 wherein the ethylenically unsaturated monomer is selected from the group consisting of monovinyl aromatic monomers; aliphatic conjugated diene monomers; acrylate monomers; vinylidene halide or vinyl halide monomers; vinyl esters of carboxyl acids containing from 1 to 18 carbon atoms, such as vinyl acetate or vinyl stearate; methacrylonitrile; and acrylonitrile.

5. The industrial coating formulation of Claim 4 wherein the ethylenically unsaturated monomer is selected from acrylate monomers.

6. The industrial coating formulation of Claim 3 wherein the oxazoline monomer is present in an amount of from 0.5 to 2.0 weight percent based on total amounts of monomer present in the copolymer.

7. The industrial coating formulation of any of Claims 2-6 comprising a blend of latexes.

## Patentansprüche

1. Verwendung eines Oxazolinmonomeren, das durch die folgende Formel wiedergegeben wird: 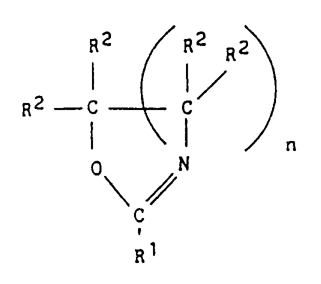 worin R¹ eine polymerisierbare organische Gruppe ist; jedes R² unabhängig voneinander Wasserstoff, Halogen, Alkyl oder eine Alkylengruppe mit 2 bis 4 Kohlenstoffatomen ist; n = 1 oder 2 ist, in Kombination mit anderen typischerweise in Emulsionspolymerisationen zur Herstellung eines Copolymerlatex verwendeten Monomeren, zur Verbesserung der Beständigkeit von Beschichtungen dieses Latex gegen Salznebel und Rost bei dem Einsatz in industriellen Beschichtungsformulierungen.

2. Verwendung eines Oxazolinmonomeren nach Anspruch 1 in einer industriellen Beschichtungsformulierung mit verbesserter Beständigkeit gegen Salznebel und Rost, wobei diese Formulierung umfaßt:
einen Pigmentträger, ein Verdickungsmittel, einen Entschäumer, ein Netzmittel, ein Dispergiermittel, ein bakteriostatisches Mittel, wenigstens ein Pigment, einen Pigmentstabilisator und ein Latexcopolymeres, worin das Latexcopolymere hergestellt ist aus:
(i) einem Oxazolinmonomeren, wie in Anspruch 1 definiert, und
(ii) wenigstens einem ethylenartig ungesättigten Comonomeren, worin das Oxazolinmonomere in einer Menge von 0,25 bis 5,0 Gew.-%, bezogen auf die Gesamtmengen von in dem Copolymeren vorliegendem Monomerem, vorhanden ist.

3. Industrielle Beschichtungsformulierung nach Anspruch 2, worin das Latexcopolymere hergestellt ist aus:
(a) einer ersten Charge von Monomerem, umfassend eine effektive Menge wenigstens eines ethylenartig ungesättigten Monomeren, und
(b) einer zweiten Charge von Monomerem, umfassend (i) das Oxazolinmonomere, wie in Anspruch 1 definiert, und (ii) eine effektive Menge wenigstens eines ethylenartig ungesättigten Comonomeren, worin das Oxazolinmonomere in einer Menge von 0,25 bis 5,0 Gew.-%, bezogen auf die Gesamtmengen von in dem Copolymeren vorliegendem Monomerem, vorhanden ist.

4. Industrielle Beschichtungsformulierung nach Anspruch 2 oder Anspruch 3, worin das ethylenartig ungesättigte Monomere aus der aus monovinylaromatischen Monomeren, aliphatischen konjugierten Dienmonomeren, Acrylatmonomeren, Vinylidenhalogenid- oder Vinylhalogenidmonomeren, Vinylestern von 1 bis 18 Kohlenstoffatome enthalten Carbonsäuren wie Vinylacetat oder Vinylstearat, Methacrylnitril und Acrylnitril bestehenden Gruppe ausgewählt ist.

5. Beschichtungsformulierung nach Anspruch 4, worin das ethylenartig ungesättigte Monomere aus Acrylatmonomeren ausgewählt ist.

6. Beschichtungsformulierung nach Anspruch 3, worin das Oxazolinmonomere in einer Menge von 0,5 bis 2,0 Gew.-%, bezogen auf die Gesamtmengen von in dem Copolymeren vorliegendem Monomerem, vorhanden ist.

7. Industrielle Beschichtungsformulierung nach einem der Ansprüche 2 bis 6, umfassend eine Mischung von Latices.

## Revendications

1. Utilisation d'un monomère de type oxazoline, représenté par la formule suivante : 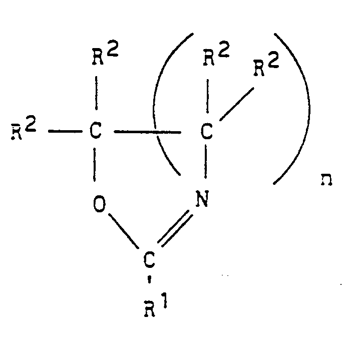 dans laquelle R¹ représente un groupe organique permettant une polymérisation, chaque R² représente indépendamment un atome d'hydrogène ou d'halogène ou un groupe alkyle, ou encore un groupe alcényle comportant de 2 à 4 atomes de carbone, et n vaut 1 ou 2,
en combinaison avec d'autres monomères typiquement utilisés dans des polymérisations en émulsion, pour améliorer la résistance de revêtements de latex au brouillard salin et à la formation de rouille, lorsque ce monomère est utilisé dans des formulations de revêtement industriel.

2. Utilisation d'un monomère de type oxazoline, défini dans la revendication 1, dans une formulation de revêtement industriel présentant une résistance améliorée au brouillard salin et à la formation de rouille, ladite formulation de revêtement comprenant un support de pigment, un épaississant, un agent de démoussage, un agent mouillant, un dispersant, un agent bactériostatique, au moins un pigment, un stabilisant pour pigment et un latex copolymère, ce latex copolymère étant préparé à partir de :
(i) un monomère de type oxazoline, défini dans la revendication 1, et
(ii) au moins un comonomère à insaturation éthylénique,
le monomère de type oxazoline étant présent en une proportion de 0,25 à 5,0 % en poids, par rapport à la quantité totale de monomères présents dans le copolymère.

3. Formulation de revêtement industriel conforme à la revendication 2, dans laquelle le latex copolymère est préparé à partir de :
(a) une première charge de monomères, comprenant une quantité efficace d'au moins un monomère à insaturation éthylénique, et
(b) une seconde charge de monomères, comprenant (i) un monomère de type oxazoline, défini dans la revendication 1, et (ii) une quantité efficace d'au moins un comonomère à insaturation éthylénique,
le monomère de type oxazoline étant présent en une proportion de 0,25 à 5,0 % en poids, par rapport à la quantité totale de monomères présents dans le copolymère.

4. Formulation de revêtement industriel conforme à la revendication 2 ou 3, dans laquelle le monomère à insaturation éthylénique est choisi dans le groupe constitué par les monomères monovinyl-aromatiques, les monomères aliphatiques de type diène conjugué, les monomères de type acrylate, les monomères de type halogénure de vinylidène ou halogénure de vinyle, les esters vinyliques d'acides carboxyliques comportant de 1 à 18 atomes de carbone, comme l'acétate de vinyle ou le stéarate de vinyle, le méthacrylonitrile et l'acrylonitrile.

5. Formulation de revêtement industriel conforme à la revendication 4, dans laquelle le monomère à insaturation éthylénique est choisi parmi les monomères de type acrylate.

6. Formulation de revêtement industriel conforme à la revendication 3, dans laquelle le monomère de type oxazoline est présent en une proportion de 0,5 à 2,0 % en poids, par rapport à la quantité totale de monomères présents dans le copolymère.

7. Formulation de revêtement industriel conforme à l'une des revendications 2 à 6, qui contient un mélange de latex.
